# EUROPÄISCHE PATENTSCHRIFT

(11) **EP 2 422 060 B1**
(45) Veröffentlichungstag und Bekanntmachung des Hinweises auf die Patenterteilung: **26.06.2013**
(21) Anmeldenummer: 10714286.1
(22) Anmeldetag: 20.04.2010
(51) Int. Cl.: F01N 3/28

(54) **VERFAHREN ZUR HERSTELLUNG EINES BESCHICHTETEN WABENKÖRPERS SOWIE ENTSPRECHENDER WABENKÖRPER**
METHOD FOR PRODUCING A COATED HONEYCOMB STRUCTURE AND CORRESPONDING HONEYCOMB STRUCTURE
PROCÉDÉ DE FABRICATION D'UN CORPS EN NID D'ABEILLES REVÊTU ET CORPS EN NID D'ABEILLES CORRESPONDANT

(30) Priorität: 22.04.2009 DE 102009018422
(43) Veröffentlichungstag der Anmeldung: 29.02.2012
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2010/055164
(87) Internationale Veröffentlichungsnummer: WO 2010/122006

(56) Entgegenhaltungen:
- EP-A1- 1 251 250
- EP-A1- 1 529 934
- EP-A1- 1 721 694
- EP-A2- 1 300 555
- DE-A1- 3 826 155

## Beschreibung

Die Erfindung betrifft ein Verfahren zur Herstellung eines Wabenkörpers, welcher aus metallischen Lagen hergestellt ist, Kanäle aufweist, durch welche eine Abgasströmung fließen kann und mit einer Beschichtung versehen ist. Derartige Wabenkörper finden ihre Anwendung in Abgassystemen von vorzugsweise mobilen Verbrennungskraftmaschinen als Katalysatorträgerkörper, Filter, Mischer und/oder Adsorber.

Wabenkörper werden typischerweise mit Washcoat beschichtet. Washcoat-Beschichtungen umfassen regelmäßig Aluminiumoxid und dienen zur Vergrößerung der Oberfläche der Kanalwandungen im Wabenkörper. Im Falle eines Katalysatorträgerkörpers trägt der Washcoat die katalytisch wirkenden Substanzen. Die Oberflächenvergrößerung ergibt sich insbesondere durch die poröse Struktur des Washcoats. Durch große Oberflächen ist die Wahrscheinlichkeit, dass den Wabenkörper passierende Abgase mit den katalytisch wirkenden Substanzen im Wabenkörper in Kontakt kommen, erhöht. Hierdurch ist die katalytische Wirksamkeit des Wabenkörpers verbessert.

Die Menge der in den Wabenkörper eingebrachten Beschichtung wird normalerweise so gewählt, dass die Oberflächenvergrößerung der Kanalwandung im Wabenkörper maximal ist. Wenn wenig Beschichtung in den Wabenkörper eingebracht wird, kann sich auch nur eine geringe Oberflächenvergrößerung ergeben. Sind zu große Beschichtungsmengen im Wabenkörper vorhanden, verschließt die Beschichtung die Kanäle des Wabenkörpers so weit, dass der Washcoat seine die Oberfläche vergrößernde Wirkung nicht entfalten kann. Die passierbaren Kanalquerschnitte des Wabenkörpers werden dabei durch eine zu große Menge Beschichtung verkleinert, wodurch der Strömungswiderstand des Wabenkörpers vergrößert wird. Es besteht sogar die Gefahr, dass Kanäle des Wabenkörpers vollständig verschlossen werden.

Die EP 1 529 934 A1 beschreibt ein Verfahren zur Herstellung eines metallischen Wabenkörpers aus einem Stapel von abwechselnd glatten und gewellten Folien mit katalytischer Beschichtung, wobei diese Beschichtung mit Aussparungen (blanken Bereichen) versehen ist und die Folien des Wabenkörpers an den blanken Bereichen stoffschlüssig verbunden sind. Hierbei sind alle Wellenberge blank und stoffschlüssig verbunden. Sie beschäftigt sich nicht mit der Problematik, dass Bereiche im Wabenkörper unbeschichtet bleiben.

Die EP 1 721 694 A1 beschreibt ein Verfahren zur Herstellung eines metallischen Wabenkörpers aus einem Stapel von abwechselnd glatten und gewellten Folien mit katalytischer Beschichtung, wobei diese Beschichtung in einem nachfolgenden Verfahren an den Wellenbergen der gewellten Folien ausgehärtete Beschichtungen wieder entfernt werden und so blanke Bereiche entstehen und die Folien des Wabenkörpers an den blanken Bereichen stoffschlüssig verbunden sind. Hierbei sind alle Wellenberge blank und stoffschlüssig verbunden. Sie beschäftigt sich nicht mit der Problematik, dass Bereiche im Wabenkörper unbeschichtet bleiben.

Die EP 1 300 555 A2 lehrt eine drastische Reduktion der katalytisch wirksamen Fläche zum Zwecke der besseren Temperaturführung Die Druckschrift beschreibt einen metallischen Wabenkörper aus einem Stapel von abwechselnd glatten und gewellten Folien mit teilweiser katalytischer Beschichtung. Auch hier sind die Folien an den blanken Wellenbergen verbunden. Die EP 1 300 555 A2 befasst sich mit der Problematik, dass die katalytische Beschichtung durch Hitzeeinwirkung beschädigt wird. Hiefür werden blanke Bereiche in jedem Kanal gebildet, so dass eine bessere Wärmeleitung stattfinden kann und der Wabenkörper besser und schneller gekühlt werden kann. Der größte Teil der Kanäle des Wabenkörpers ist unbeschichtet.

Hiervon ausgehend ist es Aufgabe der hier vorliegenden Erfindung, die im Zusammenhang mit dem Stand der Technik geschilderten Probleme zumindest zu lindern. Es soll insbesondere ein Verfahren zur Herstellung eines beschichteten metallischen Wabenkörpers und ein metallischer Wabenkörper angegeben werden, welche in Bezug auf die Beschichtung Vorteile gegenüber aus dem Stand der Technik bekannten beschichteten metallischen Wabenkörpern aufweisen.

Diese Aufgaben werden gelöst mit einem Verfahren gemäß den Merkmalen der unabhängigen Patentansprüche. Weitere vorteilhafte Ausgestaltungen des Verfahrens und des Wabenkörpers sind in den jeweils abhängig formulierten Patentansprüchen angegeben.

Das erfindungsgema̅ße Verfahren zur Herstellung eines metallischen Wabenkörpers mit einer Beschichtung weist zumindest folgende Schritte auf:
a) Bereitstellen mindestens einer zumindest teilweise gewellten metallischen Lage;
b) Erstes Beschichten zumindest einer der mindestens einen metallischen Lage mit einer Beschichtung, so dass Teilbereiche der zumindest einen metallischen Lage blank sind;
c) Anordnen der mindestens einen mindestens einen metallischen Lage zur Ausbildung einer Wabenstruktur mit Kanälen, so dass sich Berührpunkte der blanken Teilbereiche der mindestens einen metallischen Lage zueinander ergeben;
d) Ausbilden von stoffschlüssigen Verbindungsstellen an wenigskens einem Teil der Berührpunkte, so dass ein Wabenkörper gebildet wird; und
e) Ein Zweites Beschichten des Wabenkörpers mit einer Beschichtung erfolgt;

Beim Bereitstellen der metallischen Lagen in Schritt a) wird bevorzugt eine Mehrzahl glatter und eine Mehrzahl gewellter metallischer Lagen bereitgestellt. Gewellte metallische Lagen können beispielsweise eine sinusförmige Wellung aufweisen. Es sind allerdings auch andere Wellungen, wie rechteckförmige, zackenförmige oder mäanderförmige Wellungen bei den gewellten Metallfolien möglich. In Schritt b) werden wenigstens ein Teil der Lagen so mit einer (ersten) Beschichtung versehen, dass Teilbereiche blank sind. Werden bspw. zwei unterschiedliche Arten von Lagen eingesetzt (wie etwa gewellte Lagen und glatte Lagen), kann eine erste Art Lagen (bspw. die glatten Lagen) unbeschichtet bleiben, während die zweite Art Lagen (bspw. die gewellten Lagen) entsprechend beschichtet wird. Dazu kann die Beschichtung entweder derart appliziert werden, dass es möglich ist, bei der Applikation auf besagte Teilbereiche nicht zu applizieren oder die Bereiche, welche blank bleiben sollen, werden maskiert. Die Bereiche können bspw. mit Hilfe einer Antihaftschicht abgedeckt werden, so dass die Beschichtung nur in den vorgegebenen Bereichen der metallischen Lage haften bleibt. Auch ist möglich, dass die Beschichtung aufgesprüht wird und eine Maske die Bereiche abdeckt, die blank bleiben sollen.

In einer weiteren Ausgestaltung von Schritt b) ist es möglich, auf der Lage bereichsweise eine Flüssigkeit aufzubringen, die eine Passivierungsschicht darstellt und damit die später aufgebrachte Beschichtung lokal verdrängt bzw. ein Anhaften vermeidet.

Mit blank im Sinne der Erfindung ist gemeint, dass insbesondere keine oder nur eine vernachlässigbare Menge Beschichtung auf den blanken Bereichen vorhanden ist. In Schritt c) werden die in Schritt a) bereitgestellten metallischen Lagen bevorzugt als Stapel angeordnet, wobei jeweils abwechselnd glatte und gewellte Lagen aufeinander angeordnet werden. Anschließend werden ein oder mehrere derartige Lagenstapel gewickelt, gewunden und/oder gestapelt, so dass sich eine Wabenstruktur mit Kanälen ergibt. Dabei ergeben sich regelmäßig Berührpunkte zwischen glatten und gewellten metallischen Lagen, jeweils dort, wo die Wellung der gewellten metallischen Lagen Maxima aufweist. Rechts und links dieser Maxima ergibt sich jeweils ein dreieckiger Zwickel. In Schritt d) werden an einem Teil der Berührpunkte, welche sich in Schritt c) ergeben haben, Verbindungsstellen zwischen den metallischen Lagen ausgebildet. Bevorzugt ist, dass an maximal 50 % der Berührpunkte, insbesondere an maximal 10 % der Berührpunkte, Verbindungsstellen ausgebildet werden. Die Verbindungsstellen werden als Löt- oder Schweißverbindung ausgeführt. Dazu wird beispielsweise Lotmittel in den Wabenkörper eingebracht und mit Hilfe einer Wärmebehandlung eine Lötverbindung hergestellt. Das Lotmittel kann bspw. durch Kapillarkräfte in die Zwickel geführt werden. Es ist auch möglich, bereits vor Schritt c) oder bereits vor Schritt b) die metallischen Lagen mit Lotmittel oder einem Haftmittel, welches die Zuführung des Lotes vor bzw. in Schritt d) erleichtert, zu versehen.

Auf den gewellten Lagen und/oder den glatten Lagen können verschiedene Muster mit beschichteten Bereichen und blanken Bereichen erzeugt werden. Beispielsweise ist es bevorzugt, wenn die glatten Lagen vollständig blank sind und die gewellten Lagen bereichsweise blank sind. Die gewellten Lagen können beispielsweise im Bereich der Maxima (Wellenberg und/oder Wellental) blank sein. So kann sichergestellt werden, dass unabhängig von der Ausrichtung der Lagen zueinander nach dem Winden, Wickeln oder Stapeln der Wabenstruktur jeweils nur blanke Bereiche der Lagen Berührpunkte miteinander bilden.

Weiterhin ist möglich, dass sowohl auf den gewellten Lagen als auch auf den glatten Lagen beschichtete Bereiche und blanke Bereiche erzeugt werden. Damit dann nur blanke Bereiche der Lagen Berührpunkte bilden, ist eine exakte Abstimmung der blanken Bereiche und der beschichteten Bereiche mittels einer Ausrichtung der Lagen zueinander und die vorliegende Wickeltechnik bzw. Stapeltechnik der Lagen notwendig.

In einer weiteren Ausführungsform des erfindungsgemäßen Verfahrens werden sowohl die glatten Lagen als auch die gewellten Lagen an Stellen, die bei der in Schritt c) erzeugten Wabenstruktur in der Nähe zumindest einer Stirnfläche angeordnet sind, in Schritt b) nicht beschichtet. Vorzugsweise wird sowohl bei den glatten Lagen als auch bei den gewellten Lagen ein Streifen mit einer festgelegten Breite von beispielsweise maximal 20 mm [Millimeter], vorzugsweise maximal 10 mm [Millimeter] und besonders bevorzugt maximal 5 mm [Millimeter], der sich ausgehend von einer Kante der Lagen erstreckt, nicht beschichtet. Stoffschlüssige Verbindungsstellen werden in Schritt d) vorteilhafter Weise insbesondere in der Umgebung von wenigstens einer Stirnfläche der Wabenstruktur ausgebildet. Indem gerade diese Bereiche blank bzw. frei von Beschichtung verbleiben, können blanke Berührpunkte zwischen Lagen realisiert werden.

Zudem ist möglich, dass sowohl auf den gewellten Lagen als auch auf den glatten Lagen beschichtete Bereiche und blanke Bereiche in der Nähe einer Kante der Lagen erzeugt werden und die Lagen ansonsten vollständig beschichtet sind. Dann ist zwar eine exakte Abstimmung der blanken Bereiche, der beschichteten Bereiche, der Wickeltechnik bzw. Stapeltechnik und der Ausrichtung der Lagen zueinander erforderlich, es kann allerdings eine maximale Menge an Beschichtung in Schritt b) aufgebracht werden, wobei in Schritt d) trotzdem nur an blanken Bereichen der Lagen Berührpunkte ausgebildet werden.

Wenn bei einer Wabenstruktur nach Schritt c) sowohl blanke Berührpunkte als auch beschichtete Berührpunkte vorliegen, dann können die gewellten Lagen und/oder die glatten Lagen so gestaltet sein, dass die Form der Wellung die zusätzliche Dicke der Beschichtung zumindest teilweise ausgleicht. Dies kann beispielsweise durch eine variable Wellhöhe erreicht werden. Beispielsweise können die gewellten Lagen dort, wo beschichtete Berührpunkte vorliegen, eine kleinere Wellhöhe erhalten als in Bereichen blanker bzw. unbeschichteter Berührpunkte. Eine derartige Wellung kann beispielsweise durch abgesetzte Wellwalzen erreicht werden.

Nach dem Schritt d) erfolgt in Schritt e) ein zweites Beschichten des Wabenkörpers mit einer (zweiten) Beschichtung. Dabei können die Beschichtungen, welche in Schritt b) und in Schritt e) aufgebracht werden, auch unterschiedlicher Art und/oder Funktion sein. Dabei tritt nun regelmäßig der Fall ein, dass sich die Beschichtungen aus Schritt b) und e) ergänzen und/oder überlagern. Gerade bei großen Beschichtungsdicken, die ggf. den Schritt d) behindern würden, kann hier eine mehrstufige (oder sogar vielstufige) Beschichtung des Wabenkörpers vorgenommen werden.

In einer weiteren Ausführungsform des erfindungsgemäßen Verfahrens ist es auch möglich, im Rahmen des Beschichtens in Schritt e) die in Schritt b) aufgebrachte Beschichtung lediglich mit katalytisch aktivem Material zu beladen. Insbesondere kann die Beschichtung in Schritt e) mit katalytisch wirksamem Edelmetall beladen bzw. dotiert werden. Dabei ist es auch möglich, dass beim Beschichten in Schritt e) keine neue Beschichtung aufgebracht wird. Schritt d) wird normalerweise in einem Lötofen durchgeführt. Dabei treten hohe Temperaturen auf, durch die eine Edelmetallbeladung zumindest teilweise wieder aufgelöst werden kann. Dies kann vermieden werden, indem eine Edelmetallbeladung erst nach Schritt d) in Schritt e) aufgebracht wird.

In einer weiteren Ausführungsform des erfindungsgemäßen Verfahrens wird der Wabenkörper nach Schritt d) in einem Schritt e) nachbearbeitet. Mit einer Nachbearbeitung ist hier eine aktive Bearbeitung des Wabenkörpers gemeint, die vor der Applikation des Wabenkörpers in der endgültigen Anwendung, wie beispielsweise dem Abgassystem, erfolgt. Eine aktive Bearbeitung umfasst hier insbesondere keine Alterung des Wabenkörpers, die beispielsweise aufgrund des Abgases in seiner Anwendung auftritt.

Eine Nachbearbeitung kann beispielsweise ein Aufrauhen der Beschichtung und/oder der blanken Bereiche umfassen. Auch umfasst eine Nachbearbeitung ein Dotieren der Beschichtung und/oder ein Abtragen von Beschichtung.

Bevorzugt ist bei Schritt e) insbesondere, dass dabei die mindestens eine metallische Lage derart mit Beschichtung versehen wird, dass die im Wabenkörper frei liegende Oberfläche der mindestens einen metallischen Lage vollständig mit Beschichtung versehen wird. Diese frei liegende Oberfläche ist die gesamte Oberfläche der metallischen Lagen, ausgenommen der Berührpunkte der metallischen Lagen miteinander bzw. ausgenommen eines Bereiches in unmittelbarer Umgebung der Berührpunkte. Bspw. ist es möglich, die Beschichtung in Schritt e) mit einem Tauchbad aufzubringen. Dabei ist es insbesondere auch möglich beim zweiten Beschichten den Wabenkörper nicht insgesamt vollständig mit einer Beschichtung zu versehen, sondern nur in einem Teilvolumen des Wabenkörpers. Beispielweise kann die zweite Beschichtung nur in einem Teilvolumen des Wabenkörpers, welches sich ausgehend von einer Stirnseite des Wabenkörpers axial teilweise in den Wabenkörper hinein erstreckt, aufgebracht werden.

Gegenüber Wabenkörpern, die in einem einzigen Beschichtungsschritt mit Beschichtung versehen werden, haben erfindungsgemäße Wabenkörper den großen Vorteil, dass insbesondere im Bereich der Zwickel die Beschichtungsdicke wesentlich kleiner ist als außerhalb der Zwickel. Bei dem ersten Beschichten in Schritt b) sind die Zwickel noch nicht ausgebildet. Somit kann eine große Menge Beschichtung appliziert werden, ohne dass sich diese aufgrund der Kapillarkräfte in den Zwickeln ansammelt. Eine Ansammlung der Beschichtung im Bereich der Zwickel ist unerwünscht, weil gerade hierdurch eine Oberflächenverkleinerung im späteren Wabenkörper erfolgt, weil die Zwickel durch Kapillarwirkung nahezu vollständig mit Beschichtung gefüllt werden würden. In Schritt e) wird beim zweiten Beschichten eine wesentlich kleinere Menge Beschichtung appliziert. So kann einerseits sichergestellt werden, dass auch im Bereich der Zwickel überhaupt Beschichtung vorliegt, so dass auch hier eine Vergrößerung der wirksamen Oberfläche erfolgt. Andererseits erfolgt im Bereich der Zwickel auch keine unnötige Verkleinerung der Oberfläche durch Ansammlung von Beschichtung.

Ein weiterer wichtiger vorteilhafter Aspekt des erfindungsgemäßen Verfahrens ist, dass die Herstellung stoffschlüssiger Verbindungen zwischen metallischen Lagen eines Wabenkörpers durch das Verfahren erheblich vereinfacht wird. Aufgrund der blanken Bereiche, die sich aufgrund von Schritt b) auf den metallischen Lagen des Wabenkörpers ergeben, sind die Berührpunkte der metallischen Lagen zueinander jeweils blank, also, wie bereits ausgeführt, nicht oder nur vernachlässigbar mit Beschichtung versehen bzw. unbeschichtet. Die Ausbildung von Verbindungsstellen in Schritt d) kann somit wesentlich besser erfolgen, als wenn die Berührpunkte beschichtet wären.

Das erfindungsgemäße Verfahren ist auch vorteilhaft, wenn in einem der Schritte b) und e) ein Washcoat aufgebracht wird. Solche Washcoat-Beschichtungen dienen insbesondere der Oberflächenvergrößerung und/oder der Positionierung von katalytisch aktiven Materialien in Wabenkörpern. Im Zusammenhang mit dem erfindungsgemäßen Verfahren können sie die Oberfläche der Kanalwände eines Wabenkörpers besonders stark vergrößern.

Darüber hinaus kann in einem der Schritte b) und e) zumindest eine der folgenden Beschichtungen aufgebracht wird: SCR-Beschichtung zur selektiv katalytischen Reduktion, NOx-Adsorptionsbeschichtung, Beschichtung mit einem Drei-Wege-Katalysator.

Eine SCR-Beschichtung ermöglicht die selektiv katalytische Reduktion von Stickstoffoxidverbindungen mit einem Reduktionsmittel, typischerweise Ammoniak. Die selektiv katalytische Reduktion von Stickoxidverbindungen mit einem Reduktionsmittel geschieht typischerweise bei Temperaturen oberhalb von 250 °C. Durch die Anwesenheit einer SCR-Beschichtung kann diese Temperatur abgesenkt werden, so dass auch bei niedrigeren Temperaturen eine selektiv katalytische Reduktion erfolgt.

Das erfindungsgemäße Verfahren ist besonders vorteilhaft, wenn in einem der Schritte b) und e) eine SCR-Beschichtung aufgebracht wird, weil so ein Wabenkörper hergestellt werden kann, welcher besonders vorteilhaft als SCR-Katalysator verwendet werden kann. SCR-Katalysatoren sollten möglichst stabil aufgebaut sein. Somit ist es vorteilhaft, dass in Schritt d) stoffschlüssige Verbindungen ausgebildet werden können, ohne dass eine bereits aufgebrachte Beschichtung dies verhindert. Gleichzeitig sollten bei SCR-Katalysatoren möglichst keine metallischen unbeschichteten Bereiche vorliegen. An metallischen unbeschichteten Bereichen in einem Abgassystem oxidiert regelmäßig Ammoniak. Dieser Ammoniak kann dann nicht mehr als Reduktionsmittel zur Reduktion von Stickoxidverbindungen verwendet werden. Durch den zweiten Beschichtungsschritt in Schritt e) des erfindungsgemäßen Verfahrens kann sichergestellt werden, dass keine unbeschichteten Bereiche im Wabenkörper vorliegen.

Zudem kann in einem der Schritte b) und e) eine Beschichtung für einen Drei-Wege-Katalysator aufgebracht werden. In Drei-Wege-Katalysatoren werden parallel Kohlenmonoxid und Kohlenwasserstoffe oxidiert sowie Stickoxidverbindungen reduziert.

Weiter kann in einem der Schritte b) und e) auch eine Beschichtung für einen Adsorber aufgebracht werden. NOx-Adsorber adsorbieren im Abgas enthaltene Stickoxidverbindungen, wenn bestimmte Betriebsbedingungen in der Abgasanlage herrschen, in denen eine Umsetzung der Stickoxidverbindungen nicht erfolgen kann. Wenn sich die Betriebsbedingungen wiederum so verändert haben, dass eine Umsetzung erfolgen kann, geben sie die Stickoxidverbindungen wieder ab.

Auch kann bei dem Verfahren bei dem ersten Beschichten in Schritt b) so viel Beschichtung auf die metallische Lage aufgebracht werden, dass nach Schritt b) im Wabenkörper 100 bis 250 Gramm Beschichtung pro Liter Wabenkörpervolumen, vorzugsweise 180 bis 220 Gramm Beschichtung pro Liter Wabenkörpervolumen vorliegen. Eine derartige Menge Beschichtung führt zu einer großen Oberflächenvergrößerung der metallischen Lagen durch die Beschichtung. Wenn eine derartige Menge Beschichtung in die fertig gewundene, gewickelte und/oder gestapelte Wabenstruktur eingebracht würde, würde sich die Beschichtungsmenge überwiegend im Bereich der Zwickel ansammeln. Somit können derartige Beschichtungsmengen besonders vorteilhaft mit dem erfindungsgemäßen Verfahren auf die metallischen Lagen metallischer Wabenkörper eingebracht werden.

Weiterhin möglich ist hier, dass beim zweiten Beschichten in Schritt e) so viel Beschichtung in den Wabenkörper eingebracht wird, dass sich die Menge Beschichtung im Wabenkörper um 20 bis 50 g/l Wabenkörpervolumen erhöht. Eine solche Menge Washcoat kann auch in den fertigen Wabenkörper eingebracht werden, ohne dass es zu einer unerwünschten Ansammlung von Beschichtung in den Zwickeln des Wabenkörpers kommt.

Besonders vorteilhaft ist das erfindungsgemäße Verfahren, wenn in Schritt a) mindestens ein glatter Vlies und mindestens eine gewellte Metallfolie bereitgestellt werden und vor Schritt c) mindestens ein Stapel aus abwechselnd glattem Vlies und gewellten Metallfolien gebildet wird, welcher dann in Schritt c) gewickelt oder gewunden wird.

Ein derartiges metallisches Vlies wird vor allem genutzt, um Russpartikel im Abgas aufzufangen und umzusetzen. Durch die Verwendung eines Vlieses in Kombination mit einer Beschichtung kann, wenn die Beschichtung eine SCR-Beschichtung ist, eine Kombination aus Partikelfalle und SCR-Katalysator gebildet werden, welche besonders wirksam ist. Insbesondere ist hier möglich, dass beim ersten Beschichten in Schritt b) lediglich die gewellte Metallfolie beschichtet wird. Als weitere Verbesserung kann die gewellte Metallfolie Umlenkstrukturen aufweisen, welche die Abgasströmung auf das metallische Vlies umlenken und so zu einem Verfangen von Partikeln aus der Abgasströmung im metallischen Vlies führen.

Die geringe Menge Beschichtung, welche in Schritt e) appliziert wird, ermöglicht auch das geeignete Beschichten der einzelnen Drähte, Filamente, etc. eines Vliesmaterials. Durch eine große Menge Beschichtung, wie sie in Schritt b) appliziert wird, würde sich das Vlies vollständig mit Beschichtung füllen, wodurch seine vliesspezifische Wirkung verloren ginge.

Darüber hinaus ist ein Wabenkörper erfindungsgemäß, welcher mindestens eine zumindest gewundene, gewickelte oder gestapelte, zumindest teilweise gewellte metallische Lage aufweist, wobei die mindestens eine metallische Lage Berührpunkte und stoffschlüssige Verbindungsstellen aufweist und so Kanalwände und im Bereich der Berührpunkte Zwickel zwischen den metallischen Lagen gebildet sind, wobei die Kanalwände des Wabenkörpers mit einer Beschichtung versehen sind, die in den Zwickeln eine erste Beschichtungsdicke und außerhalb der Zwickel eine zweite Beschichtungsdicke hat, wobei die zweite Beschichtungsdicke größer ist als die erste Beschichtungsdicke.

Derartige Wabenkörper zeichnen sich durch eine besonders große innere Oberfläche aus. Weitere Vorteile und Merkmale sind im Zusammenhang mit dem erfindungsgemäßen Verfahren bereits eingehend beschrieben. Die zweite Beschichtungsdicke kann insbesondere mehr als doppelt oder sogar mehr als dreimal so groß sein wie die erste Beschichtungsdicke.

Besonders vorteilhaft ist der erfindungsgemäße Wabenkörper, wenn mindestens zwei metallische Lagen vorhanden sind, wobei die mindestens zwei metallischen Lagen mindestens ein glattes metallisches Vlies und mindestens eine gewellte Metallfolie sind.

Ein solcher Wabenkörper eignet sich insbesondere als Kombination aus SCR-Katalysator und Partikelfalle, deren Vorteile ebenfalls im Zusammenhang mit dem erfindungsgemäßen Verfahren bereits eingehend beschrieben werden.

Ein erfindungsgemäßer Wabenkörper ist auch besonders vorteilhaft, wenn er ein offener Partikelabscheider ist. Offene Partikelabscheider zeichnen sich dadurch aus, dass keine durchgängige Wandung zwischen der Abgaseintrittseite und der Abgasaustrittseite des Partikelabscheiders existiert. Die Offenheit offener Partikelabscheider kann dadurch beschrieben werden, dass Partikel mit einem bestimmten Durchmesser durch den Partikelabscheider hindurch rieseln können. Ergänzende Informationen zu solchen offenen Partikelabscheidern können aus früheren Anmeldungen der Anmelderin entnommen werden, z. B. der WO-A-02/00326. Ein mit dem erfindungsgemäßen Verfahren beschichteter offener Partikelabscheider ist insbesondere vorteilhaft, weil das bereits eingehend beschriebene Verfahren die Offenheit des Wabenkörpers mit sicherstellt.

Ein erfindungsgemäßer Wabenkörper kann auch ein geschlossener Filter sein. Geschlossene Filter zeichnen sich regelmäßig dadurch aus, dass eine Abgasströmung, die den geschlossenen Filter passiert, zwangsweise und garantiert wenigstens eine Filterlage, welche z. B. durch ein poröses Material gebildet ist, durchdringen muss, um von der Anströmseite des Filters zur Abströmseite des Filters zu gelangen. Geschlossene Filter weisen häufig Kanäle auf, die jeweils auf einer Seite (Anströmseite bzw. Abströmseite) des Filters geschlossen und auf der jeweils anderen Seite geöffnet sind. Abgas, welches den Filter passiert, muss eine Kanalwand zwischen einem anströmseitig geöffneten Kanal und einem abströmseitig geöffneten Kanal passieren (auch so genannte Wall-Flow-Filter).

Ein solcher Wabenkörper findet insbesondere Einsatz im Abgassystem eines Kraftfahrzeuges, insbesondere als so genannter SCR-Katalysator zur Umsetzung von Stickoxiden im Abgas einer Verbrennungskraftmaschine des Kraftfahrzeuges.

Die für den erfindungsgemäßen Wabenkörper beschriebenen Vorteile und Merkmale sind genauso auch zur Erläuterung und Verbesserung des erfindungsgemäßen Verfahrens verwendbar.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: einen erfindungsgemäßen Wabenkörper,
- Fig. 2:: einen Ausschnitt aus der Wabenstruktur eines erfindungsgemäßen Wabenkörpers,
- Fig. 3:: eine metallische Lage zur Ausbildung eines erfindungsgemäßen Wabenkörpers,
- Fig. 4:: einen als geschlossenen Filter ausgeführten erfindungsgemäßen Wabenkörper,
- Fig. 5: einen als offenen Partikelabscheider ausgeführten erfindungsgemäßen Wabenkörper, und
- Fig. 6: einen Ausschnitt aus einer gewellten metallischen Lage und einer glatten metallischen Lage, die im Rahmen des erfindungsgemäßen Verfahrens verarbeitet werden.

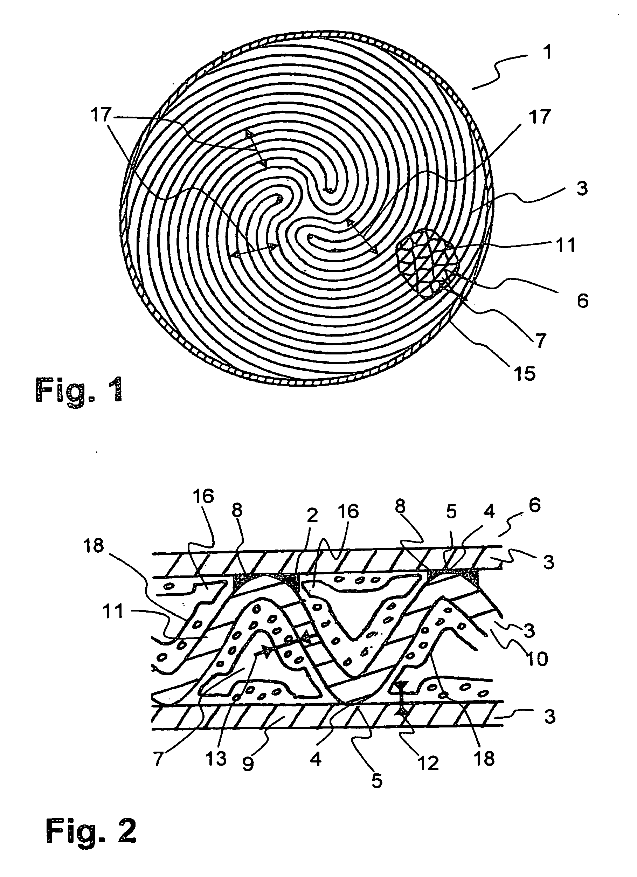

Fig. 1 zeigt einen erfindungsgemäßen Wabenkörper 1. Dieser weist eine Wabenstruktur 6 mit Kanälen 7 auf, die aus metallischen Lagen 3 gebildet ist. Die metallischen Lagen 3 bilden für die Kanäle 7 Kanalwände 11. Darüber hinaus hat der Wabenkörper 1 einen Mantel 15. Die Wabenstruktur 6 des Wabenkörpers 1 ist im Falle des Wabenkörpers 1 in der Fig. 1 gewunden, wobei hier drei einzelne Lagenstapel 17 miteinander verwunden sind.

Fig. 2 stellt einen Ausschnitt aus der Wabenstruktur 6 eines erfindungsgemäßen Wabenkörpers 1 dar. Auch in Fig. 2 sind die metallischen Lagen 3 zu erkennen. Es ist hier jeweils ein glatter metallischer Vlies 9 und eine gewellte Metallfolie 10 aufeinander gestapelt abgebildet. Die glatten Vliese 9 und die gewellten Metallfolien 10 bilden zusammen die Kanalwände 11 der Kanäle 7 der Wabenstruktur 6. Die glatten Vliese 9 und die gewellten Metallfolien 10 weisen Berührpunkte 5 zueinander auf. An einem Teil der Berührpunkte 5 sind Verbindungsstellen 8 ausgebildet. Im Bereich der Berührpunkte 5 und der Verbindungsstellen 8 existieren Zwickel 16 zwischen den glatten Vliesen 9 und den gewellten Metallfolien 10. Die die Kanäle 7 begrenzenden Kanalwände 11 sind mit einer Beschichtung 2 versehen. Die Beschichtung 2 weist im Bereich der Berührpunkte 5, der Verbindungsstellen 8 bzw. im Bereich der Zwickel 16 eine erste Dicke 12 auf. In den übrigen Bereichen des glatten Vlieses 9 bzw. der gewellten Metallfolien 10 weist die Beschichtung 2 eine zweite Beschichtungsdicke 13 auf. Die zweite Beschichtungsdicke 13 ist wesentlich größer als die erste Beschichtungsdicke 12. In Fig. 2 ist zu erkennen, dass sich aufgrund der geringeren ersten Beschichtungsdicke 12 gegenüber der zweiten Beschichtungsdicke 13 eine größere wirksame Oberfläche 18 der Beschichtung 2 hin zu den für das Abgas passierbaren Kanälen 7 ergibt.

Die Ausführungsform des Wabenkörpers 1 gemäß Fig. 1 kann mit Hilfe des erfindungsgemäßen Verfahrens hergestellt werden. Zur Herstellung der Ausführungsform des Wabenkörpers 1 gemäß Fig. 1 müssen sämtliche metallischen Lagen 3, also sowohl die glatten Vliese 9, als auch die gewellten Metallfolien 10 beim ersten Beschichten in Schritt b) des erfindungsgemäßen Verfahrens mit einer Beschichtung 3 versehen werden, so dass Teilbereiche 4 der metallischen Lage 3 blank sind. Anschließend müssen in Schritt c) die glatten Vliese 9 und die gewellten Metallfolien 10 derart angeordnet werden, dass sich die Wabenstruktur 6 mit Kanälen 7, Berührpunkten 5 und Kanalwänden 11 ergibt. Nun werden die stoffschlüssigen Verbindungsstellen 8 an den Berührpunkten 5 in Schritt d) ausgebildet. Anschließend erfolgt in Schritt e) das zweite Beschichten des Wabenkörpers 1. Die erste Beschichtungsdicke 12 ergibt sich in den nach Schritt b) noch blanken Teilbereichen 4 des glatten Vlieses 9 bzw. der gewellten Metallfolien 10 nur aufgrund des zweiten Beschichtens in Schritt e). Die zweite Beschichtungsdicke 13 ergibt sich in den übrigen Bereichen des glatten Vlieses 9 bzw. der gewellten Metallfolien 10 aufgrund der Überlagerung des ersten Beschichtens und des zweiten Beschichtens. Die zweite Beschichtungsdicke 13 ist darum größer als die erste Beschichtungsdicke 12.

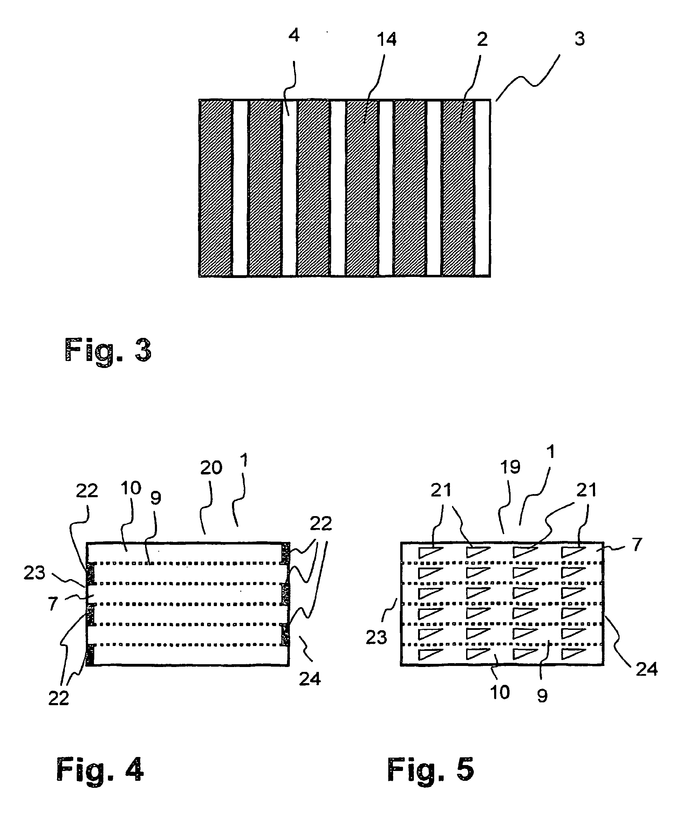

In Fig. 3 ist eine metallische Lage 3, wie sie Ergebnis des Schrittes b) des erfindungsgemäßen Verfahrens ist, in einer Draufsicht dargestellt. Diese metallische Lage 3 weist in beschichteten Bereichen 14 eine Beschichtung 2 auf. Darüber hinaus existieren Teilbereiche 4, welche blank, also nicht mit Beschichtung versehen sind. Die Teilbereiche 4 sind genau da vorgesehen, wo in Schritt c) des erfindungsgemäßen Verfahrens sich Berührpunkte 5 der metallischen Lagen 3 untereinander (siehe Fig. 2) ergeben.

Fig. 4 zeigt einen als geschlossenen Filter 20 ausgeführten erfindungsgemäßen Wabenkörper 1. Der Wabenkörper 1 weist mehrere gewellte Metallfolien 10 und mehrere glatte Vliese 9 auf. Die gewellten Metallfolien 10 sind in der hier gewählten Schnittdarstellung durch den Wabenkörper 1 seitlich geschnitten abgebildet, wodurch die Wellung nicht zu erkennen ist. Durch die gewellten Metallfolien 10 und die glatten Vliese 9 werden sich von der Anströmseite 23 zu der Abströmseite 24 erstreckende Kanäle durch den Wabenkörper 1 gebildet. Die Kanäle sind durch Kanalverschlüsse 22 jeweils auf der Abströmseite 24 oder auf der Anströmseite 23 verschlossen. Vorzugsweise ist ein anströmseitig nicht verschlossener, demnach geöffneter Kanal jeweils vollständig von abströmseitig nicht verschlossenen, bzw. geöffneten Kanälen umgeben. Abgase, die den Wabenkörper 1 von der Anströmseite 23 zu der Abströmseite 24 passieren, müssen zwangsläufig einen glatten Vlies 9 durchdringen.

Fig. 5 zeigt einen als Partikelabscheider 19 ausgeführten erfindungsgemäßen Wabenkörper 1. Der Wabenkörper 1 weißt mehrere gewellte Metallfolien 10 und mehrere glatte Vliese 9 auf. Die gewellten Metallfolien 10 sind in der hier gewählten Schnittdarstellung durch den Wabenkörper 1 seitlich geschnitten abgebildet, wodurch die Wellung nicht zu erkennen ist. Durch die gewellten Metallfolien 10 und die glatten Vliese 9 werden sich von der Anströmseite 23 zu der Abströmseite 24 erstreckende Kanäle durch den Wabenkörper 1 gebildet. Die gewellten Metallfolien 10 sind jeweils mit Umlenkstrukturen 21 versehen, welche eine die Kanäle 7 passierende Abgasströmung zumindest teilweise in Richtung der glatten Vliese 9 umlenkt. So passiert ein Großteil der Abgase auf dem Weg von der Anströmseite 23 zur Abströmseite 24 die glatten Vliese 9. Ein vollständiges Verstopfen eines derartigen offenen Partikelabscheiders 19 ist nicht möglich, weil die Abgase im Falle vollständig verstopfter glatter Vliese 9 dem direkten Weg entlang der einzelnen Kanäle 7 von der Anströmseite 23 zur Abströmseite 24 durch den offenen Partikelabscheider 19 folgen können.

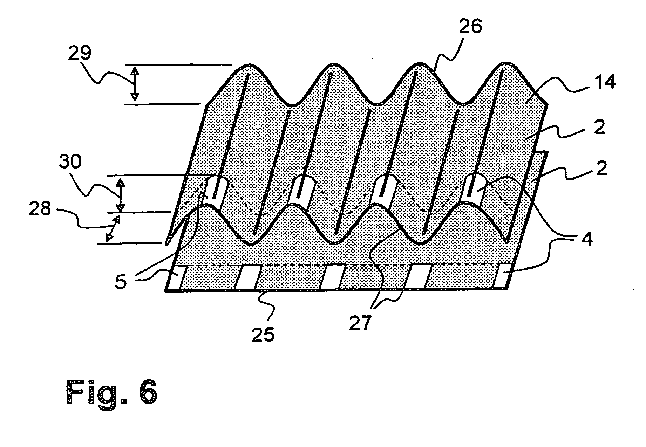

Fig. 6 zeigt beispielhaft eine glatte metallische Lage 25 und eine gewellte metallische Lage 26, die zu einer Wabenstruktur verarbeitet werden können. Die glatte metallische Lage 25 und die gewellte metallische Lage 26 weisen jeweils mit einer Beschichtung 2 versehene beschichtete Bereiche 14 und blanke Bereiche 4 auf. Berührpunkte 5 werden sowohl in den beschichteten Bereichen 14 als auch in den blanken Bereichen 4 gebildet. Stoffschlüssige Verbindungen sollen allerdings nur in den blanken Bereichen 4 ausgebildet werden. Die blanken Bereiche 4 sind jeweils in der Nähe von Kanten 27 (beispielsweise in einem sich an den Kanten anschließenden und parallel verlaufenden Randbereich von maximal 10 mm) der glatten metallischen Lagen 25 und der gewellten metallischen Lagen 26 ausgebildet und erstrecken sich über eine Breite 28 ausgehend von den Kanten 27. Die Kanten 27 bilden bei einer später gewickelten oder gestapelten Wabenstruktur eine Stirnfläche. Weil Berührpunkte 5 in blanken Bereichen 4 und in beschichteten Bereichen 14 vorliegen, können sich Abstandsunterschiede zwischen benachbarten glatten metallischen Lagen 25 und oder gewellten metallischen Lagen 26 ergeben. Um diese Abstandsunterschiede auszugleichen, können die gewellten metallischen Lagen 26 im Bereich beschichteter Berührpunkte 5 mit einer ersten Wellhöhe 29 und im Bereich blanker Berührpunkte 5 mit einer zweiten Wellhöhe 30 ausgeführt sein, wobei die zweite Wellhöhe 30 kleiner sein kann als die erste Wellhöhe 29 und/oder eine Dicke der Beschichtung 2 zumindest teilweise ausgleichen kann.

Die Erfindung betrifft demnach ein Verfahren zur Herstellung eines metallischen Wabenkörpers, welcher aus metallischen Lagen hergestellt ist, Kanäle aufweist, durch welche eine Abgasströmung fließen kann und mit einer Beschichtung versehen ist. Derartige Wabenkörper finden ihre Anwendung in Abgassystemen von vorzugsweise mobilen Verbrennungskraftmaschinen als Katalysatorträgerkörper, Filter, Mischer und/oder Adsorber. Das erfindungsgemäße Verfahren beinhaltet eine zweistufige Applikation der Beschichtung und es ermöglicht die Herstellung besonders vorteilhafter beschichteter metallischer Wabenkörper, die sich durch eine große Beschichtungsoberfläche und einen geringen Strömungswiderstand auszeichnen. Gleichzeitig ermöglicht das erfindungsgemäße Verfahren mit einer geringeren Menge Beschichtung eine besonders große Oberflächenvergrößerung in einem Wabenkörper zu erzielen.

**Bezugszeichenliste**

| | |
|---|---|
| 1 | Wabenkörper |
| 2 | Beschichtung |
| 3 | Metallische Lage |
| 4 | Teilbereich |
| 5 | Berührpunkte |
| 6 | Wabenstruktur |
| 7 | Kanäle |
| 8 | Verbindungsstelle |
| 9 | Vlies |
| 10 | Metallfolie |
| 11 | Kanalwand |
| 12 | Erste Beschichtungsdicke |
| 13 | Zweite Beschichtungsdicke |
| 14 | Beschichteter Bereich |
| 15 | Mantel |
| 16 | Zwickel |
| 17 | Lagenstapel |
| 18 | Oberfläche |
| 19 | Partikelabscheider |
| 20 | geschlossener Filter |
| 21 | Umlenkstruktur |
| 22 | Kanalverschluss |
| 23 | Anströmseite |
| 24 | Abströmseite |
| 25 | glatte metallische Lage |
| 26 | gewellte metallische Lage |
| 27 | Kante |
| 28 | Breite |
| 29 | erste Wellhöhe |
| 30 | zweite Wellhöhe |

## Patentansprüche

1. Verfahren zur Herstellung eines metallischen Wabenkörpers (1) mit einer Beschichtung (2) aufweisend zumindest die folgenden Schritte:
a) Bereitstellen mindestens einer zumindest teilweise gewellten metallischen Lage (3);
b) Erstes Beschichten zumindest einer der mindestens einen metallischen Lage (3) mit einer Beschichtung (2), so dass Teilbereiche (4) der zumindest einen metallischen Lage (3) blank sind;
c) Anordnen der mindestens einen metallischen Lage (3) zur Ausbildung einer Wabenstruktur (6) mit Kanälen (7), so dass sich Berührpunkte (5) der blanken Teilbereiche (5) der mindestens einen metallischen Lage (3) ergeben; und
d) Ausbilden von stoffschlüssigen Verbindungsstellen (8) an wenigstens einem Teil der Berührpunkte (5), so dass ein Wabenkörper (1) gebildet wird,
**dadurch gekennzeichnet, dass**
e) ein zweites Beschichten des Wabenkörpers (1) mit einer Beschichtung (2) erfolgt.

2. Verfahren nach dem vorhergehenden Patentanspruch, wobei Schritt e) so erfolgt, dass die im Wabenkörper (1) frei liegende Oberfläche der mindestens einen metallische Lage (3) zumindest in einem Teilvolumen des Wabenkörpers (1) vollständig mit Beschichtung (2) versehen wird.

3. Verfahren nach einem der vorhergehenden Patentansprüche, wobei zumindest in einem der Schritte b) und e) ein Washcoat aufgebracht wird.

4. Verfahren nach einem der vorhergehenden Patentansprüche, wobei bei dem ersten Beschichten in Schritt b) so viel Beschichtung auf die metallische Lage (3) aufgebracht wird, dass nach Schritt b) im Wabenkörper (1) 100 bis 250 Gramm Beschichtung (2) pro Liter Wabenkörpervolumen vorliegen.

5. Verfahren nach einem der vorhergehenden Patentansprüche, wobei bei dem zweiten Beschichten in Schritt e) so viel Beschichtung (2) in den Wabenkörper (1) eingebracht wird, dass sich die Menge Beschichtung (2) im Wabenkörper (1) um 20 bis 50 Gramm pro Liter Wabenkörpervolumen erhöht.

6. Verfahren nach einem der vorhergehenden Patentansprüche, wobei in Schritt a) mindestens ein glattes metallisches Vlies (9) und mindestens eine gewellte Metallfolie (10) bereitgestellt werden und vor Schritt c) mindestens ein Lagenstapel (17) aus abwechselnd glattem Vlies (9) und gewellten Metallfolien (10) gebildet wird, welcher dann in Schritt c) gewickelt oder gewunden wird.

7. Wabenkörper (1) aufweisend mindestens eine zumindest gewundene, gewickelte oder gestapelte zumindest teilweise gewellte metallische Lage (3), wobei die mindestens eine metallische Lage (3) Berührpunkte (5) und stoffschlüssige Verbindungsstellen (8) aufweist und so Kanalwände (11) und im Bereich der Verbindungsstellen (8) Zwickel (16) gebildet sind, wobei die Kanalwände (11) des Wabenkörpers (1) mit einer Beschichtung (2) versehen sind, die in den Zwickeln (16) eine erste Beschichtungsdicke (12) und außerhalb der Zwickel (16) eine zweite Beschichtungsdicke (13) hat,
**dadurch gekennzeichnet, dass**
die zweite Beschichtungsdicke (13) größer ist als die erste Beschichtungsdicke (12).

8. Wabenkörper (1) nach Patentanspruch 7, wobei mindestens zwei metallische Lagen (3) vorhanden sind und die mindestens zwei metallischen Lagen mindestens ein glattes metallisches Vlies (9) und mindestens eine gewellte Metallfolie (10) sind.

9. Wabenkörper (1) nach Patentanspruch 7 oder 8, wobei der Wabenkörper (1) ein offener Partikelabscheider oder ein geschlossener Filter ist.

## Claims

1. Method for producing a metallic honeycomb body (1) with a coating (2), comprising at least the following steps:
a) providing of at least one at least partially corrugated metallic layer (3);
b) a first coating of at least one of the at least one metallic layer (3) with a coating (2), leaving partial areas (4) of the at least one metallic layer (3) bare;
c) arranging the at least one metallic layer (3) so as to form a honeycomb structure (6) with channels (7), thereby producing contact points (5) between the bare partial areas (5) of the at least one metallic layer (3); and
d) forming material joints (8) at least some of the contact points (5), thereby forming a honeycomb body (1)
**characterized in that**
e) a second coating of the honeycomb body (1) with a coating (2) takes place.

2. Method according to the preceding claim, wherein step e) is performed in such a way that all the exposed surface area of the at least one metallic layer (3) in the honeycomb body (1) is provided with coating (2), at least in a partial volume of the honeycomb body (1).

3. Method according to one of the preceding claims, wherein a washcoat is applied, at least in one of steps b) and e).

4. Method according to one of the preceding claims, wherein, during the first coating operation in step b), the amount of coating applied to the metallic layer (3) is such that, after step b), there are 100 to 250 grams of coating (2) per liter of honeycomb body volume in the honeycomb body (1).

5. Method according to one of the preceding claims, wherein, during the second coating operation in step e), the amount of coating (2) introduced into the honeycomb body (1) is such that the amount of coating (2) in the honeycomb body (1) increases by 20 to 50 grams per liter of honeycomb body volume.

6. Method according to one of the preceding claims, wherein, in step a), at least one smooth metallic nonwoven (9) and at least one corrugated metal foil (10) are provided and, before step c), at least one stack (17) of layers consisting alternately of smooth nonwoven (9) and corrugated metal foils (10) is formed, this stack then being wound or coiled in step c).

7. Honeycomb body (1) having at least one at least partially corrugated metallic layer (3), which is at least coiled, wound or stacked, wherein the at least one metallic layer (3) has contact points (5) and material joints (8), and in this way channel walls (11) and crotches (16) are formed in the region of the joints (8), wherein the channel walls (11) of the honeycomb body (1) are provided with a coating (2) which has a first coating thickness (12) in the crotches (16) and a second coating thickness (13) outside the crotches (16),
**characterized in that**
the second coating thickness (13) is greater than the first coating thickness (12).

8. Honeycomb body (1) according to claim 7, wherein there are at least two metallic layers (3) and the at least two metallic layers are at least one smooth metallic nonwoven (9) and at least one corrugated metal foil (10).

9. Honeycomb body (1) according to claim 7 or 8, wherein the honeycomb body (1) is an open particle separator or a closed filter.

## Revendications

1. Procédé de fabrication d'un corps en nid d'abeilles métallique (1) comprenant un revêtement (2) présentant au moins les étapes suivantes :
a) fourniture d'au moins une couche métallique (3) au moins partiellement ondulée ;
b) premier revêtement d'au moins une de l'au moins une couche métallique (3) avec un revêtement (2), de sorte que des régions partielles (4) de l'au moins une couche métallique (3) soient vierges ;
c) agencement de l'au moins une couche métallique (3) de manière à créer une structure en nid d'abeilles (6) avec des canaux (7), de manière à obtenir des points de contact (5) des régions partielles vierges (5) de l'au moins une couche métallique (3) ; et
d) réalisation de zones de connexion par liaison de matière (8) au niveau d'au moins une partie des points de contact (5), de manière à former un corps en nid d'abeilles (1) ;
**caractérisé en ce que**
e) un deuxième revêtement du corps en nid d'abeilles (1) est réalisé avec un revêtement (2).

2. Procédé selon la revendication précédente, dans lequel l'étape e) a lieu de telle sorte que la surface exposée de l'au moins une couche métallique (3) dans le corps en nid d'abeilles (1) soit complètement pourvue du revêtement (2) au moins dans un volume partiel du corps en nid d'abeilles (1).

3. Procédé selon l'une quelconque des revendications précédentes, dans lequel au moins dans l'une des étapes b) et e), une couche protectrice est appliquée.

4. Procédé selon l'une quelconque des revendications précédentes, dans lequel, lors du premier revêtement dans l'étape b), on applique du revêtement sur la couche métallique (3) dans une mesure telle qu'après l'étape b) dans le corps en nid d'abeilles (1) on ait 100 à 250 grammes de revêtement (2) par litre de volume de corps en nid d'abeilles.

5. Procédé selon l'une quelconque des revendications précédentes, dans lequel, lors du deuxième revêtement dans l'étape e), on introduit du revêtement (2) dans le corps en nid d'abeilles (1) dans une mesure telle que la quantité de revêtement (2) dans le corps en nid d'abeilles (1) augmente de 20 à 50 grammes par litre de volume de corps en nid d'abeilles.

6. Procédé selon l'une quelconque des revendications précédentes, dans lequel, dans l'étape a), au moins un non tissé lisse métallique (9) et au moins un feuil métallique ondulé sont fournis et avant l'étape c), au moins une pile de couches (17) constituée d'une alternance de non tissés lisses (9) et de feuils métalliques ondulés (10) est formée, laquelle pile de couches est ensuite enroulée ou spiralée dans l'étape c).

7. Corps en nid d'abeilles (1) présentant au moins une couche métallique (3) au moins spiralée, enroulée ou empilée au moins partiellement ondulée, l'au moins une couche métallique (3) présentant des points de contact (5) et des zones de connexion par liaison de matière (8) et de ce fait des parois de canaux (11) et des coins (16) dans la région des zones de connexion (8) étant formés, les parois de canaux (11) du corps en nid d'abeilles (1) étant pourvues d'un revêtement (2) qui présente dans les coins (16) une première épaisseur de revêtement (12) et à l'extérieur des coins (16) une deuxième épaisseur de revêtement (13),
**caractérisé en ce que**
la deuxième épaisseur de revêtement (13) est supérieure à la première épaisseur de revêtement (12).

8. Corps en nid d'abeilles (1) selon la revendication 7, dans lequel au moins deux couches métalliques (3) sont prévues et les au moins deux couches métalliques sont au moins un non tissé métallique lisse (9) et au moins un feuil métallique ondulé (10).

9. Corps en nid d'abeilles (1) selon la revendication 7 ou 8, dans lequel le corps en nid d'abeilles (1) est un séparateur de particules ouvert ou un filtre fermé.
